# EUROPEAN PATENT SPECIFICATION

(11) **EP 2 557 193 B1**
(45) Date of publication and mention of the grant of the patent: **01.04.2020**
(21) Application number: 11766051.4
(22) Date of filing: 11.04.2011
(51) Int. Cl.: C22C 38/00, C22C 38/02, C22C 38/04, C22C 38/06, C22C 38/12, C22C 38/14, C21D 9/46, C21D 6/00, C21D 8/02, C21D 8/04, C23C 2/00, C23C 2/02, C23C 2/26, C23C 2/28, B32B 15/01, C21D 1/673

(54) **HIGH-STRENGTH STEEL SHEET HAVING EXCELLENT HOT ROLLING WORKABILITY, AND PROCESS FOR PRODUCTION THEREOF**
HOCHFESTES STAHLBLECH MIT HERVORRAGENDER HEISSWALZUNGS-VERARBEITBARKEIT UND HERSTELLUNGSVERFAHREN DAFÜR
FEUILLE D'ACIER DE RÉSISTANCE ÉLEVÉE AYANT UNE EXCELLENTE MALLÉABILITÉ AU LAMINAGE À CHAUD ET PROCÉDÉ DE PRODUCTION ASSOCIÉ

(30) Priority: 09.04.2010 JP 2010090796
(43) Date of publication of application: 13.02.2013
(73) Proprietor: JFE Steel Corporation, Tokyo, 100-0011 (JP)
(72) Inventor: FUNAKAWA, Yoshimasa, Tokyo 100-0011 (JP)
(74) Representative: Hoffmann Eitle
(86) International application number: PCT/JP2011/059459
(87) International publication number: WO 2011/126154

(56) References cited:
- EP-A1- 1 338 665
- EP-A1- 1 918 396
- EP-A1- 2 053 139
- WO-A1-2005/005670
- WO-A1-2009/118945
- WO-A1-2009/118945
- JP-A- H0 711 382
- JP-A- 2000 328 186
- JP-A- 2009 084 643
- JP-A- 2009 084 643
- JP-B2- 3 775 337

## Description

### [Technical Field]

The present invention relates to a high strength steel sheet suitable as materials for transportation machinery, materials for construction machinery, and the like and particularly relates to an improvement of warm press formability as automotive parts. The "high strength" used herein refers to the case of having a high strength of a tensile strength TS of 590 MPa or more and preferably 780 MPa or more.

### [Background Art]

In recent years, an improvement of fuel efficiency of automobiles has been strongly required in terms of a demand for preservation of the global environment and a reduction in weight of automobile bodies has been progressed. For such a reduction in weight of automobile bodies, a reduction in thickness of steels for automotive parts has been strongly demanded and thus the amount of usage of high strength steel sheets has increased.

As the high strength steel sheets, various high strength steel sheets have been proposed in which a high strength is achieved by compounding low temperature transformed products, such as martensite, with ferrite. However, in general, such high strength steel sheets have problems in that the plastic deformation has been suppressed and the ductility (elongation) has decreased as compared with that of mild steel or low strength steel sheets. When the steel sheets are press-formed into complex shapes at room temperatures, risks, such as the generation of cracks, are high and the press forming is difficult. Further, because of high strength, the high strength steel sheets have a problem in that, in the press forming at room temperatures, the shape accuracy of parts decreases due to spring back.

Separately from the high strength steel sheets strengthened by low temperature transformed phase, PTL 1, for example, has proposed a hot-rolled steel sheet having high formability and excellent uniformity of strength containing C : 0.1% or lower, Mo : 0.05 to 0.6%, and Ti : 0.02 to 0.10%, in which carbides containing Ti and Mo in the range of satisfying Ti/Mo : 0.1 or more in atomic ratio are dispersed and deposited substantially in a ferrite structure. The hot-rolled steel sheet disclosed in PTL 1 can be manufactured by a manufacturing method including heating steel having a composition preferably containing C : 0.06% or lower, Si : 0.3% or lower, Mn : 1 to 2%, P : 0.06% or lower, S : 0.005% or lower, Al : 0.06 % or lower, N : 0.06% or lower, Cr : 0.04 to 0.5%, Mo : 0.05 to 0.5%, Ti : 0.02 to 0.10%, and Nb : 0.08% or lower and satisfying Ti/Mo : 0.1 or more in atomic ratio to an austenite single phase temperature range, completing finish rolling at 880°C or higher, and coiling the steel at 550 to 700°C. The tensile strength of the steel sheet is 590 MPa or more but the steel sheet has high formability and thus can be subjected particularly to press forming of a member having a complex cross sectional shape at room temperatures.

As one method for solving problems in cold press forming of high strength steel sheets, a die quench method has been proposed. The die quench method is a press method including heating a steel sheet, to an austenite temperature range of 900°C or higher, and press forming the steel sheet into a desired part shape using a press die, in which the steel sheet (parts) can be quenched by a die simultaneously during the pressing. Thus, the steel sheet can be formed into a desired part shape, the structure can be formed into a structure mainly containing martensite by quenching by a die, and high strength parts can be manufactured with high shape accuracy. However, according to the die quench method, since the steel sheet is heated and formed at high temperatures, the following problems inevitably arise: oxide scales are generated on the surface to reduce the surface properties or, in the case of a coated steel sheet, the steel sheet is exposed to a high temperature to deteriorate a coating layer, for example. Furthermore, according to the die quench method, the steel sheet needs to hold for 10 s or more within the die in order to sufficiently quench the steel sheet. Therefore, the die quench method has a problem that the productivity excessively decreases.

For such problems, there is a former warm press method including heating a steel sheet, to about 200°C, and then press forming the same. However, according to the method, because of low temperature, a reduction rate of the steel sheet strength during press forming is insufficient, and an increase rate of ductility is also insufficient, and thus the generation of cracks during press forming cannot be avoided and a spring back occurs at the same level of that of press forming at room temperature.

Then, a method including heating a steel sheet, to a warm range of higher than 200°C and preferably 300°C or higher and about 850°C, and press forming the same is considered to be a method for solving the problems of the former warm press method.

PTL 2, for example, discloses a method for obtaining high strength pressed parts utilizing warm press forming at a temperature higher than that of the former press forming. The method for manufacturing high strength press formed parts disclosed in PTL 2 is a method for performing warm forming including heating a steel sheet to a temperature of 200 to 850°C, and giving plastic strain of 2% or more to a position requiring strength. According to the method, by heating a steel sheet to a specific temperature range and imparting a given amount of plastic strain thereto in combination, a desired high strength can be obtained. The steel sheet for use in the technique disclosed in PTL 2 is a steel sheet having a composition containing C : 0.01 to 0.20%, Si : 0.01 to 3.0%, Mn : 0.1 to 3.0%, P : 0.002 to 0.2%, S : 0.001 to 0.020%, Al : 0.005 to 2.0%, N : 0.002 to 0.01%, and Mo : 0.01 to 1.5% and further containing one or two or more elements of Cr : 0.01 to 1.5%, Nb : 0.005 to 0.10%, Ti : 0.005 to 0.10%, V : 0.005 to 0.10%, and B : 0.0003 to 0.005%, in which a specific relational equation between the contents of Si, P, Mo, Cr, Nb, Ti, V, and B satisfies Equation (A), which is equal to or lower than a given value (140 or lower).

WO 2009/118945 A1 discloses a hot-rolled steel sheet excellent in fatigue properties and stretch-flange formability wherein Ti/C is in the range of 2.5 or more to less than 3.5, Nb, Zr, V, Cr, Mo, B and W are not included, and with a microstructure that comprises a mixed microstructure of polygonal ferrite and quasi-polygonal ferrite in a proportion of greater than 96%, a maximum tensile strength being in a range of 520 MPa or more to less than 720 MPa, an aging index AI being in a range of more than 15 MPa, a product of a hole expansion ratio (λ) % and a total elongation (El) % being in a range of 2350 or more, and a fatigue limit being in a range of 200 MPa or more.

### [Citation List]

### [Patent Literature]

PTL 1: Japanese Unexamined Patent Application Publication No. 2002-322541
PTL 2: Japanese Patent No. 3962186

### [Summary of Invention]

### [Technical Problem]

When a warm press method including heating to a temperature ranging from higher than 200°C to about 850°C, and press forming is applied to various high strength steel sheets containing low temperature transformed phase, the steel sheets are heated to a temperature higher than the manufacturing temperature, and thus the steel sheet strength decreases, which facilitates press forming. However, a strengthened structure factor, such as martensite, is decomposed during heating. Therefore, the method has a problem in that a desired high strength cannot be maintained when cooled to room temperature after warm pressing.

When such a warm press method is applied to the steel sheet manufactured by the technique disclosed in PTL 1, there arises a problem in that a bulge-formed position is easily cracked.

The technique disclosed in PTL 2 also achieves an increase in strength by heating a steel sheet to a specific temperature range and imparting plastic strain equal to or higher than a specific amount thereto in combination as essential processes. Therefore, according to the technique, a desired high strength cannot be obtained in parts in which a processing and forming amount is lower than a necessary value. Furthermore, there arises a problem in that since the strain amount generally varies according to positions even within parts, the strength does not always uniformly increase, and thus the practical use thereof is greatly limited.

It is an object of the invention to solve such problems of the former techniques and provide a high strength steel sheet having a tensile strength TS of 590 MPa or more and preferably 780 MPa or more that has excellent warm formability, can be subjected to a warm press method including heating the steel sheet to a temperature ranging from higher than 200°C to about 850°C, and press forming the same at the temperature, does not require holding in a die for a long period of time during processing, and can provide parts having a desired high strength irrespective of the warm processing condition and a method for manufacturing the same.

### [Solution to Problem]

The present inventors have conducted extensive research on the deformation behavior of a steel sheet during warm press forming in order to achieve the above-described objects. As a result, the present inventors have found that, first, in a position contacting a die (punch) of a steel sheet, during warm press forming, the temperature sharply decreases due to cool by the die (punch) and the position is subjected to bulge forming at a relatively low temperature (lower than 400°C) and, in contrast, in a position not contacting a die, a reduction in the temperature of the steel sheet does not occur and the position is subjected to stretch flange forming at a high temperature (400°C or higher). More specifically, in the warm press forming method in which a steel sheet is heated to a temperature ranging from higher than 200°C to about 850°C, processing in different temperature ranges is simultaneously performed within the same steel sheet. Therefore, a steel sheet having properties which allow the steel sheet to be processed in different temperature ranges is required for warm press forming.

Then, as a result of further examination, the present inventors have reached a conclusion that when a material (steel sheet) has tensile properties in which the uniform elongation is high at a low temperature of lower than 400°C and the local elongation is high at a high temperature of 400°C or higher and has a high strength of a tensile strength TS at ordinary temperature of 590 MPa or more and preferably 780 MPa or more after warm press forming, warm press forming can be applied to the material to thereby manufacture high strength automotive parts having complex shapes.

More specifically, the present inventors have found that a steel sheet having the following tensile properties is preferable as a steel sheet suitable for warm press forming.

The present inventors have newly found that a steel sheet suitable for warm press forming is a steel sheet having tensile properties having both the following properties: the uniform elongation (here, strain at the maximum load) is high at a relatively low temperature (lower than 400°C) corresponding to a position contacting a die (punch) and being subjected to bulge forming at a relatively low temperature (lower than 400°C) and the local elongation (here, strain from the maximum load to fracture) is high at a high temperature (400°C or higher) corresponding to a position not contacting a die (punch) and being subjected to bulge forming at a high temperature (400°C or higher) is high.

According to a further examination of the present inventors, present inventors have newly found that the steel sheet having the above-described tensile properties is a steel sheet having a matrix which is substantially a ferrite single phase, i.e., a matrix in which the ferrite fraction is 95% or more and preferably 98% or more, and having a structure in which alloy carbides (deposit) under 10 nm are dispersed and deposited in the matrix. The carbides are deposited with all the variants to the base phase, i.e., a state of having so-called no variant selection.

Here, the carbides that are dispersed and deposited in the "state having no variant selection" refer to a state in which orientation of carbides is not uniform to the base phase. In contrast, a "state having variant selection" refers to the case that the orientation of carbides is uniform to the base phase, e.g., that are observed in interphase precipitation.

According to a further examination of the present inventors, the present inventors have found that the steel sheet (hot rolled steel sheet) having the above-described structure can be obtained by coiling at a temperature of lower than 600°C after a hot-rolling, and then subjecting the steel sheet to heat treatment at a temperature range of 650 to 750°C.

The present invention has been accomplished based on the above-described findings and further examinations.

The invention is defined in the claims.

### [Advantageous Effects of Invention]

According to the present invention, a high strength steel sheet with excellent warm stamp formability can be manufactured with ease and at low cost, and industrially remarkable advantageous effects are demonstrated. Moreover, the invention has an advantageous effect in which high strength parts for automobiles having a desired high strength and a desired shape accuracy can be manufactured with ease and at low cost by the application of warm press forming.

### [Description of Embodiments]

A steel sheet of the invention is a steel sheet having a high strength of a tensile strength of 590 MPa or more and having tensile properties suitable for warm press forming, and particularly ductility in conformity with warm press forming. When the test temperature is a low temperature of lower than 400°C, the steel sheet of the invention has tensile properties in which the uniform elongation is larger than the local elongation, i.e., ductility in which the uniform elongation is 40% or more in terms of a ratio to the total elongation. In contrast, when the test temperature is a high temperature of 400°C or higher, the local elongation is larger than the uniform elongation, i.e., ductility in which the ratio of the local elongation and the uniform elongation exceeds 1.0. Thus, a steel sheet having deformation properties with which the steel sheet is sufficiently adapted to the temperature history of each part of the steel sheet during warm press forming and the formed shape of each part of the steel sheet by a die (punch), i.e., a steel sheet with excellent warm stamp formability, is achieved.

At a position that is subjected to bulge forming by heating the position to a temperature ranging from higher than 200°C to about 850°C, and then bringing the position into contact with a die to reduce the steel sheet temperature, bulge forming can be successfully performed when the uniform elongation at a low temperature is higher than the total elongation. In contrast, a position that is subjected to stretch flange forming does not contact a die and thus a high steel sheet temperature is maintained, and therefore elongation flange forming can be successively performed when the local elongation at a high temperature is higher than the uniform elongation. Thus, by achieving both the ductility at a low temperature and the ductility at a high temperature, press formation into parts having complex shapes by warm press forming is facilitated. With a steel sheet that cannot satisfy either the ductility at a low temperature or the ductility at a high temperature, parts having desired complex shapes cannot be manufactured by warm press forming.

Here, the "uniform elongation" refers to a strain from the start of tensile test to the maximum load (ratio to the gauge length) determined from the stress-strain curve obtained in a tensile test not depending on test temperatures. The "local elongation" refers to a strain from the maximum load to fracture (ratio to the gauge length) determined from the stress-strain curve obtained in a tensile test not depending on test temperatures. The "total elongation" refers to the total strain from the start of tensile test to fracture (ratio to the gauge length), which is a so-called total elongation, determined from the stress-train curve obtained in a tensile test.

The "test temperature is a low temperature of lower than 400°C" means that a test temperature is 300°C, for example. The "test temperature is a high temperature of 400°C or higher" is that fact that a test is performed at a test temperature of 500°C and the tensile properties in the temperature range may be represented.

With respect to the ductility when the test temperature is lower than 400°C, the total elongation, the local elongation, and the uniform elongation are determined from the stress-strain curve obtained by collecting I type test pieces (parallel position width: 10 mm, GL : 50 mm) specified in JIS G 0567 from a steel sheet, and then performing a tensile test based on the regulation of JIS G 0567 at a test temperature of lower than 400°C (e.g., 300°C). The cross head speed is 10 mm/min.

In contrast, with respect to the ductility when the test temperature is 400°C or higher, the total elongation, the uniform elongation, and the local elongation are calculated from the stress-strain curve obtained by collecting I type test pieces (parallel portion width: 10 mm, GL : 50mm) specified in JIS G 0567 from a steel sheet, heating the test piece to a test temperature of 400°C or higher (e.g., 500°C), and then performing a high temperature tensile test at a cross head speed of 10 mm/min based on the regulation of JIS G 0567.

In order to satisfy the tensile properties (tensile ductility), a steel sheet having a matrix which is substantially a ferrite single phase and having a structure in which alloy carbides having a size of lower than 10 nm are dispersed and deposited in the matrix in a state having no variant selection is manufactured.

In the steel sheet of the invention, the structure (matrix) is substantially a ferrite single phase. By using a ferrite phase having sufficient ductility as the structure, desired warm press formability can be achieved and also a large reduction in strength due to heating to a warm press forming temperature as in a conventional high strength steel sheet containing a low temperature transformed phase, such as martensite, does not occur. Thus, a desired high strength can be maintained even after warm press forming. Here, the "substantially a ferrite single phase" includes the case of containing a second phase up to 5% in terms of area ratio. More specifically, the "substantially a ferrite single phase" means that the ferrite phase is 95% or more in terms of area ratio to the entire structure. When containing the second phase up to 5%, a large reduction in strength due to heating to a warm press forming temperature is not recognized and the advantageous effects of the invention can be demonstrated. The second phase is preferably 2% or lower. Furthermore, the steel sheet of the invention has a structure in which alloy carbides having a size of lower than 10 nm are dispersed and deposited in the matrix. When the size of the alloy carbides deposited in the matrix becomes larger, e.g., 10 nm or more, the carbides become coarse, the strength decreases, the local ductility becomes small, and the warm stamp formability decreases. The number of dispersion of the alloy carbides having a size of lower than 10 nm is preferably 5 × 10¹¹/mm³ or more. The alloy carbides here contains alloy elements, such as Ti, Nb, and V. The alloy carbide here may also be a compound thereof.

In the steel sheet of the invention, the alloy carbides having a size of lower than 10 nm that are dispersed in the matrix are deposited in a state having no variant selection. The "state having no variant selection" refers to the case where the relationship between the crystal orientation of the ferrite and the crystal orientation of the alloy carbides is not constant and the direction is not fixed in one direction.

Due to the fact that the fine alloy carbides are dispersed and deposited in the state having no variant selection, the local elongation becomes larger than the uniform elongation in a tensile test at a high temperature and the uniform elongation becomes larger than the local elongation in a tensile test at a low temperature, and thus a steel sheet suitable for warm press forming can be manufactured. In contrast, in the case of a steel sheet in which fine alloy carbides are dispersed and deposited in the state having variant selection, tensile properties (ductility) in which the local elongation is larger than the uniform elongation cannot be secured particularly at a high temperature.

Next, the limitation reason for the preferable composition of the steel sheet of the invention will be described.

The steel sheet of the invention preferably has a composition containing, in terms of % by mass, C : 0.01 to 0.2%, Si : 0.5% or lower, Mn : 0.1 to 2%, P : 0.03% or lower, S : 0.01% or lower, Al : 0.01 to 0.07%, and N : 0.01% or lower and further containing two or more elements selected from Ti : 0.005 to 0.3%, Nb : 0.005 to 0.6%, V : 0.005 to 1.0%, Mo : 0.005 to 0.5%, W : 0.01 to 1.0%, and B : 0.0005 to 0.0040%, optionally Cu : 0.1% or lower, optionally Ni : 0.1% or lower, optionally Sn : 0.1% or lower, optionally Mg : 0.01% or lower, optionally Sb : 0.01% or lower, optionally Co : 0.01% or lower, and the balance Fe with inevitable impurities. Hereinafter, unless otherwise specified, % by mass is simply indicated as %.

### C : 0.01 to 0.2%

C is the most important element that forms a carbide and increases the strength of a steel sheet. In the invention, C is deposited as a fine carbide in a matrix in processes before forming processing in warm press forming, particularly in heat treatment after hot rolling, and contributes to an increase in strength of parts. In order to obtain such an advantageous effect, C is contained in a concentration of 0.01% or more. In contrast, when the content exceeds 0.2%, it becomes difficult to substantially achieve a ferrite single phase in the matrix and a reduction in ductility becomes remarkable. Therefore, C is limited to the range of 0.01 to 0.2%. C is more preferably 0.18% or lower. According to a desired strength level, the C amount can be generally specified. For example, in a grade of a tensile strength TS of 590 MPa, C is preferably 0.01% or more and 0.03% or lower. In a grade of a tensile strength TS of 780 MPa, C is preferably more than 0.03% and 0.06% or lower. In a grade of a tensile strength TS of 980 MPa, C is preferably more than 0.06% and 0.09% or lower. In a grade of a tensile strength TS of 1180 MPa, C is preferably more than 0.09% and 0.2% or lower.

### Si : 0.5% or lower

Si is an element that generally increases tempering softening resistance and thus is positively added. However, in the invention, Si is preferably reduced as much as possible in order to promote degradation of surface properties or deposition of alloy carbides with variant selection. Moreover, since Si increases deformation resistance in warm working, an increase in elongation is blocked. Thus, Si is limited to 0.5% or lower in the invention. Si is more preferably 0.3% or lower and still more preferably 0.1% or lower.

### Mn: 0.1 to 2%

Mn is an element having the action of forming a solid solution to increase the strength of a steel sheet. In order to obtain such an advantageous effect, Mn is contained in a proportion of 0.1% or more. When the content exceeds 2%, segregation becomes remarkable and the hardenability increases, so that it becomes difficult to achieve a ferrite single phase as the structure. Therefore, Mn is limited to 2% or lower. Mn is more preferably 0.1 to 1.6%.

### P : 0.03% or lower

P is an element that effectively contributes to an increase in strength of a steel sheet by solid solution strengthening but is easily segregated in the grain boundary to thereby cause remarkable cracks during press forming. Therefore, P is preferably reduced as much as possible in the invention. When P is reduced to about 0.03% or lower, such an adverse effect is reduced to a permissible level. Thus, P is 0.03% or lower. P is more preferably 0.02% or lower.

### S : 0.01% or lower

S forms MnS, promotes the generation of voids during press forming, then reduces warm stamp formability. Therefore, S is preferably reduced as much as possible. When S is reduced to about 0.01% or lower, such an adverse effect can be reduced to a permissible level. Therefore, S is limited to 0.01% or lower. S is more preferably 0.002% or lower.

### Al : 0.01 to 0.07%

Al is an element that acts as a deoxidizing agent. In order to obtain such an advantageous effect, Al is contained in a concentration of 0.01% or more. However, the content of more than 0.07% easily increases oxide inclusions, reduces the cleanliness of steel, and reduces the warm stamp formability of steel. Therefore, Al is limited to 0.07% or lower. Al is more preferably 0.03 to 0.06%.

### N : 0.01% or lower

N is an element having an adverse effect, such as a reduction in local elongation due to coarse TiN. Thus, N is preferably reduced as much as possible in the invention. The content of more than 0.01% causes the formation of coarse nitrides and reduces formability. Therefore, N is limited to 0.01% or lower. N is more preferably 0.005% or lower.

Two or more elements selected from Ti: 0.005 to 0.3%, Nb : 0.005 to 0.6%, V : 0.005 to 1.0%, Mo : 0.005 to 0.5%, W : 0.01 to 1.0%, and B : 0.0005 to 0.0040% Ti, Nb, V, Mo, W, and B are all elements that constitute fine carbides or promotes precipitation and two or more elements selected therefrom are contained. In order to obtain such an advantageous effect, it is preferable to contain each of Ti : 0.005% or more, Nb : 0.005% or more, V : 0.005% or more, Mo : 0.005% or more, W : 0.01% or more, and B : 0.0005% or more. In contrast, the content of more than each of Ti : 0.3%, Nb : 0.6%, V : 1.0%, Mo : 0.5%, W : 1.0%, and B : 0.0040%, the warm stamp formability is reduced due to solid solution strengthening. Therefore, when contained, they are limited to the range of Ti : 0.005 to 0.3%, Nb : 0.005 to 0.6%, V : 0.005 to 1.0%, Mo : 0.005 to 0.5%, W : 0.01 to 1.0%, and B : 0.0005 to 0.0040%.

As a combination for forming fine carbides (alloy carbides), the combinations of Ti-Mo, Nb-Mo, Ti-Nb-Mo, Ti-W, and Ti-Nb-Mo-W are more preferable. Particularly when V and Ti are contained in combination, a fine carbide, which is the target of the invention, is easily obtained by achieving a V/Ti ratio of 1.75 or lower in terms of mass ratio.

The balance other than the ingredients mentioned above contain Fe and inevitable impurities. As the inevitable impurities, Cu : 0.1% or lower, Ni : 0.1% or lower, Sn : 0.1% or lower, Mg : 0.01% or lower, Sb : 0.01% or lower, and Co : 0.01% or lower each are permitted.

Next, a method for manufacturing a steel sheet of the invention will be described.

In the invention, a steel having the above-described composition is used as a starting material. In the invention, a method for manufacturing a steel is not necessary particularly limited and, in general, known manufacturing methods can all be applied. For example, it is preferable to smelt molten steel having the above-described composition in a revolving furnace or the like to form a steel, such as slab, by casting methods, such as a continuous casting method, but the method is not limited thereto in the invention. There arises no problem even when, after the continuous casting, the steel, such as slab, is charged in a heating furnace and hot rolled without cooling the steel to room temperature or the steel is subjected to hot direct rolling without heating.

In order to sufficiently solute alloy carbides and the like in the steel, first, the steel is heated to an austenite single phase temperature range of 1150°C or higher. When the heating temperature is lower than 1150°C, the deformation resistance is excessively high and the load to a hot rolling mill becomes high, which sometimes results in a difficulty of hot rolling. When the heating temperature exceeds 1300°C (high temperature), coarsening of austenite crystal grains is remarkable and the generation of oxide scale on slab surface becomes remarkable, so that the oxidization loss is high, which results in the fact that a reduction in yield becomes remarkable. Therefore, the heating temperature is 1300°C or lower. Therefore, the heating temperature of the steel is 1150 to 1300°C.

As described above, the steel heated to the austenite single phase temperature range is subsequently subjected to a hot rolling process. In the hot rolling process, hot rolling in which the rolling end temperature is 850°C or higher is performed to the steel to form a hot rolled sheet, and then the hot rolled sheet is coiled at a temperature of 400°C or higher and lower than 600°C.

When the rolling end temperature is lower than 850°C, the surface structure becomes coarse and the warm stamp formability decreases. Therefore, the rolling end temperature is 850°C or higher. The finishing temperature is more preferably 880 to 940°C.

After the completion of rolling, the hot rolled sheet is coiled at a temperature of 400°C or higher and lower than 600°C. When the coiling temperature is lower than 400°C, a martensite phase is generated and thus a structure of substantially a ferrite single phase cannot be achieved and also alloy carbides easily become coarse, which makes it difficult to obtain fine carbides. In contrast, when the coiling temperature is 600°C or higher, alloy carbides with variant selection are generated in the steel sheet, which makes it impossible to secure desired warm stamp formability. The coiling temperature is preferably lower than 550°C and more preferably 530°C or lower.

In the case of the hot rolling conditions in the range of the invention, fine (lower than 10 nm) alloy carbides are hardly deposited after the hot rolling process and dispersion and deposition in the state having no variant selection are not observed.

After the hot rolling process, surface scale is removed from the hot rolled sheet by pickling or the like. Thereafter, a heat treatment process is performed. In the heat treatment process, the hot rolled sheet is subjected to heat treatment in which the hot rolled sheet is held at a temperature of 650 to 750°C and with a retention time of 10 to 300 s, and then cooled. The cooling process is not necessary particularly limited and air cooling or allowing cooling is preferable. In the heat treatment process, desired alloy carbides are deposited by heat treatment at 650 to 750°C. When the heating temperature is lower than 650°C, the deposition of alloy carbides is late and dispersion and deposition in the state having no variant selection of desired alloy carbides under 10 nm are not observed. Moreover, due to the fact that bainite partially remains, it becomes difficult to obtain a matrix of a ferrite single phase. In contrast, at a high temperature of higher than 750°C, the deposition is fast to form coarse alloy carbides, which results in the fact that a desired high strength cannot be secured. Moreover, the structure is partially transformed into austenite to form a ferrite + martensite structure after cooling.

When the heating temperatures are duplicated, the heat treatment during warm press forming can be used in place of the above-described heat treatment. In the steel sheet of the invention, the alloy carbides under 10 nm are not deposited after the forming processing but have already been deposited before the forming processing during the warm press forming.

The steel sheet to which the heat treatment process is subjected may be further subjected to coating treatment for attaching a coated layer to the surface to form a coated steel sheet. As the coated layer, a galvanized layer, an electrogalvanized layer, a molten aluminum coated layer and the like can all be mentioned.

When a galvanized layer is formed on the hot rolled sheet surface, the heat treatment process is performed by, for example, utilizing preferably a continuous galvanizing line, the resultant steel sheet is cooled to a temperature of about 500°C or lower, and subsequently galvanizing treatment is performed in which the resultant steel sheet is continuously immersed in a galvanizing bath held at a given temperature of about 470°C, and thus a galvanized layer may be formed on the steel sheet surface. There arises no problem at all even when a common coating line other than the continuous galvanizing line is utilized. Moreover, there arises no problem even when zinc is applied for every steel sheet cut into a desired size, for example.

Moreover, there arises no problem at all even when common coated layer alloying treatment is further performed after the galvanizing treatment to form a galvannealed layer.

Hereinafter, the invention will be described in more detail with reference to Examples.

### [EXAMPLES]

Steel materials (slabs) of the composition shown in Table 1 were subjected to a hot rolling process for forming a hot rolled sheet having a sheet thickness of 1.6 mm at heating temperatures, finish rolling temperatures, and coiling temperatures of the conditions shown in Table 2, subsequently subjected to pickling for removing scale on the hot rolled sheet surface, and then subjected to a heat treatment process in which heat treatment is performed at heating temperatures, retention times, and cooling conditions of the conditions shown in Table 2. Some hot rolled sheets were cooled to a cooling stop temperature shown in Table 2 without cooling to room temperature in the above-described heat treatment process, and subsequently subjected to galvanizing treatment in which the steel sheets were immersed in a galvanizing bath of a liquid temperature of 470°C or further subjected to alloying treatment (520°C) to form a galvanized layer or a galvannealed layer on the surface, and thus a coated sheet was obtained. The deposit amount was 45 g/m².

Test pieces were cut from the obtained hot rolled sheets or the coated sheets, and then structure observation and a tensile test were carried out. The test methods are as follows.

### (1) Structure observation

From the obtained steel sheets, test pieces for structure observation were collected. The cross section (L section) in parallel to the rolling direction was ground, and then subjected to nital corrosion. Then, the cross section was observed for the structure under an optical microscope (magnification: 400 times) and a scanning electron microscope (magnification: 5000 times) and photographed. Then, the type was identified and the structure fraction of each phase was measured using an image analyzer. Furthermore, using thin films prepared from the steel sheets, the ingredients contained in the deposits deposited in a matrix were analyzed with a transmission electron microscope with an energy dispersion X-ray spectroscopy device (EDX) to identify the type of the deposits (alloy carbides) and also investigate the size and the dispersion state of the deposits (alloy carbides). The dispersion state was classified based on whether the deposition was deposition with variant selection or deposition with variant selection.

### (2) Tensile test

From the obtained steel sheets, I type test pieces (parallel-portion width: 10 mm, GL: 50 mm) specified in JIS G 0567 were collected, and then subjected to a tensile test at room temperature (20°C) based on the regulation of JIS Z 2241 to measure the tensile properties (Yield Strength YS, Tensile Strength TS, Elongation El). Moreover, a tensile test was carried out at a test temperature of lower than 400°C (300°C) based on the regulation of JIS G 0567 to determine the total elongation from the start of tensile test to fracture and the strain before the indication of the maximum load from the start of tensile test as the uniform elongation from the obtained stress-strain curve, and then (uniform elongation) / (total elongation) was calculated.

Moreover, from the obtained steel sheets, I type test pieces (parallel-portion width: 10 mm, GL: 50 mm) specified in JIS G 0567 were collected, and then subjected to a high-temperature tensile test at a test temperature of 400°C or higher (500°C) based on the regulation of JIS G 0567. From the obtained stress-strain curve, the strain before the indication of the maximum load from the start of tensile test as the uniform elongation and the strain from the indication of the maximum load to fracture as the local elongation were determined, and then the uniform elongation / total elongation was calculated. The test temperature was a value measured by a thermo couple attached to the center of the parallel portion of the test pieces and the test was performed at a cross head speed of 10 mm/min.

The case where, in the tensile test carried out at a test temperature of lower than 400°C (300°C), the uniform elongation / total elongation was 40% or more and, in the tensile test carried out at a test temperature of 400°C or higher (500°C), the local elongation / the uniform elongation exceeded 1.0 was graded as ○ and evaluated to be excellent in warm press formability. The cases other than the above-described case were graded as × and evaluated to be poor in warm press formability.

From the obtained steel sheets, tensile test pieces were collected and then subjected to a tensile test at room temperature while simulating the thermal history of warm press forming including holding at a heating temperature of 700°C and with a holding time of 3 min and air cooling without processing to measure the tensile strength TS and observe changes in strength due to warm press forming heating.

The obtained results are shown in Table 3.

**[Table 1]**

| Steel No. | Chemical composition (% by mass) | | | | | | | |
|---|---|---|---|---|---|---|---|---|
| | C | Si | Mn | P | S | Al | N | Ti,Nb,V,Mo,W,B |
| A | 0.081 | 0.02 | 0.90 | 0.012 | 0.0005 | 0.033 | 0.0038 | Ti:0.17,Mo:0.36 |
| B | 0.085 | 0.04 | 1.53 | 0.008 | 0.0009 | 0.041 | 0.0025 | Ti:0.13,V:0.26 |
| C | 0.073 | 0.02 | 0.72 | 0.010 | 0.001 | 0.035 | 0.0044 | Ti:0.11,V:0.25,B:0.0006 |
| D | 0.040 | 0.01 | 1.35 | 0.011 | 0.0005 | 0.041 | 0.0035 | Ti:0.088,Mo:0.18 |
| E | 0.043 | 0.05 | 1.53 | 0.011 | 0.0008 | 0.053 | 0.0031 | Ti:0.09,V:0.11 |
| F | 0.025 | 0.02 | 0.25 | 0.012 | 0.003 | 0.041 | 0.0050 | Ti:0.08,B:0.0023 |
| G | 0.022 | 0.01 | 0.15 | 0.008 | 0.002 | 0.050 | 0.0030 | Nb:0.15,B:0.0025 |
| H | 0.18 | 0.02 | 0.91 | 0.015 | 0.0007 | 0.055 | 0.0038 | Ti:0.21,V:0.40,Mo:0.31 |
| I | 0.17 | 0.01 | 0.81 | 0.008 | 0.0007 | 0.033 | 0.0051 | Ti:0.25,V:0.50,W:0.62 |
| J | 0.12 | 0.80 | 2.13 | 0.007 | 0.0009 | 0.055 | 0.0059 | - |

**[Table 2]**

| Steel sheet No. | Steel No. | Hot rolling process | | | Heat treatment process | | | | Galvanization treatment | Alloying treatment | Remarks |
|---|---|---|---|---|---|---|---|---|---|---|---|
| | | Heating temperature (°C) | Finish rolling temperature (°C) | Coiling temperature (°C) | Heating temperature (°C) | Holding time (s) | Cooling stop temperature (°C) | Cooling method | Done/Not done | Done/Not done | |
| 1 | A | 1250 | 900 | 525 | 700 | 60 | 470 | Gas cooling | - | - | Present invention example |
| 2 | A | 1220 | 890 | 500 | 720 | 80 | 490 | Gas cooling | - | - | Present invention example |
| 3 | A | 1250 | 900 | 650 | 700 | 40 | 480 | Gas cooling | - | - | Comparative example |
| 4 | A | 1230 | 910 | 350 | - | - | - | - | - | - | Comparative example |
| 5 | A | 1250 | 890 | 520 | 740 | 80 | 500 | Gas cooling | Done | Not done | Present invention example |
| 6 | B | 1230 | 890 | 530 | 680 | 100 | 470 | Gas cooling | - | - | Present invention example |
| 7 | B | 1250 | 920 | 500 | 720 | 80 | 520 | Gas cooling | Done | Done | Present invention example |
| 8 | C | 1280 | 930 | 480 | 700 | 60 | 550 | Gas cooling | Done | Done | Present invention example |
| 9 | D | 1220 | 900 | 450 | 720 | 80 | 450 | Gas cooling | - | - | Present invention example |
| 10 | E | 1230 | 910 | 440 | 740 | 60 | 530 | Roll cooling | Done | Not done | Present invention example |
| 11 | F | 1200 | 900 | 550 | 700 | 90 | 550 | Gas cooling | - | - | Present invention example |
| 12 | G | 1250 | 920 | 430 | 680 | 100 | 520 | Gas cooling | Done | Not done | Present invention example |
| 13 | H | 1280 | 930 | 480 | 700 | 80 | 550 | Roll cooling | - | - | Present invention example |
| 14 | l | 1280 | 910 | 450 | 720 | 90 | 500 | Gas cooling | - | - | Present invention example |
| 15 | J | 1230 | 860 | 400 | 700 | 60 | 520 | Gas cooling | - | - | Comparative example |

**[Table 3]**

| Steel sheet No. | Steel No. | Structure | | | | | Tensile properties | | | | | | | Warm press formability | | | Tensile strength after warm press forming (MPa) | Remarks |
|---|---|---|---|---|---|---|---|---|---|---|---|---|---|---|---|---|---|---|
| | | Type* | F fraction (%) | Second phase fraction (%) | Alloy carbide | | Yield strength YS (MPa) | Tensile strength TS (MPa) | Elongation El(%) | Test temperature: 300°C | | Test temperature: 500°C | | Uniform elongation/Total elongation (%) | Local elongation/Uniform elongation | Evaluation | | |
| | | | | | Done/Not-done of dispersion ** | Size (nm) | | | | Uniform elongation (%) | Total elongation (%) | Uniform elongation (%) | Local elongation (%) | | | | | |
| 1 | A | F | 100 | - | Done | 3 | 921 | 1010 | 18 | 9.3 | 19 | 5 | 18 | 49 | 3.6 | ○ | 1050 | Present invention example |
| 2 | A | F | 100 | - | Done | 4 | 902 | 990 | 17 | 8.9 | 18 | 4 | 17 | 49 | 4.3 | ○ | 995 | Present invention example |
| 3 | A | F+P | 98 | 2 | Not done | 4 | 911 | 1020 | 17 | 5.7 | 18 | 8 | 14 | 32 | 1.8 | × | 1031 | Comparative example |
| 4 | A | F+B | 5 | 95 | -*** | - | 803 | 1080 | 13 | 4.0 | 14 | 12 | 6 | 29 | 0.5 | × | 683 | Comparative example |
| 5 | A | F | 100 | - | Done | 4 | 906 | 985 | 17 | 9.1 | 18 | 5 | 18 | 51 | 3.6 | ○ | 998 | Present invention example |
| 6 | B | F | 100 | - | Done | 3 | 923 | 1035 | 16 | 8.9 | 18 | 5 | 20 | 49 | 4.0 | ○ | 1041 | Present invention example |
| 7 | B | F | 100 | - | Done | 4 | 950 | 1088 | 17 | 9.8 | 20 | 5 | 21 | 49 | 4.2 | ○ | 1088 | Present invention example |
| 8 | C | F | 100 | - | Done | 3 | 904 | 1033 | 16 | 9.1 | 19 | 6 | 18 | 48 | 3.0 | ○ | 1034 | Present invention example |
| 9 | D | F | 100 | - | Done | 2 | 734 | 810 | 20 | 10.1 | 22 | 8 | 18 | 46 | 2.3 | ○ | 815 | Present invention example |
| 10 | E | F | 100 | - | Done | 2 | 750 | 815 | 19 | 10.3 | 23 | 8 | 19 | 45 | 2.4 | ○ | 820 | Present invention example |
| 11 | F | F | 100 | - | Done | 3 | 551 | 610 | 25 | 15.1 | 30 | 14 | 21 | 50 | 1.5 | ○ | 621 | Present invention example |
| 12 | G | F | 100 | - | Done | 3 | 543 | 623 | 26 | 16.3 | 31 | 15 | 23 | 53 | 1.5 | ○ | 625 | Present invention example |
| 13 | H | F | 100 | - | Done | 2 | 1081 | 1231 | 14 | 9.3 | 17 | 9 | 12 | 55 | 1.3 | ○ | 1235 | Present invention example |
| 14 | | F | 100 | - | Done | 2 | 1051 | 1210 | 14 | 8.8 | 16 | 9 | 13 | 55 | 1.4 | ○ | 1205 | Present invention example |
| 15 | J | M+F | 15 | 85 | -*** | - | 950 | 1210 | 13 | 5.0 | 14 | 8 | 10 | 35 | 1.3 | × | 775 | Comparative example |

| | | | | | | | | | | | | | | | | | | |
|---|---|---|---|---|---|---|---|---|---|---|---|---|---|---|---|---|---|---|
| *) F: Ferrite, M: Martensite, P: Perlite, C: Cementite **) Dispersion: Dispersion and deposition without variant selection ***) No dispersion and deposition of alloy carbide | | | | | | | | | | | | | | | | | | |

All the present invention examples have a high strength of 590 MPa or more and (Uniform elongation) / (Total elongation) is 40% or more in the tensile test carried out at a test temperature of lower than 400°C (300°C) and (Local elongation) / (Uniform elongation) exceeds 1.0 in the tensile test carried out at a test temperature of 400°C or higher (500°C). Thus, the present invention examples show excellent warm press formability and significant changes in strength due to heating during the warm press forming are not observed.

In contrast, in the comparative example without the range of the invention, (Uniform elongation) / (Total elongation) is lower than 40% in the tensile test carried out at a test temperature of lower than 400°C (300°C) and (Local elongation) / (Uniform elongation) is 1.0 or lower in the tensile test carried out at a test temperature of 400°C or higher (500°C). Thus, in the comparative examples, the warm press formability decreases or the tensile strength significantly decreases due to heating during the warm press forming.

## Claims

1. A high strength hot rolled steel sheet with excellent warm stamp formability,
the high strength hot rolled steel sheet having a high strength of a tensile strength of 590 MPa or more and tensile properties in which the local elongation being the strain from the indication of the maximum load to fracture is larger than the uniform elongation being the strain before the indication of the maximum load from the start of tensile test obtained in a tensile test carried out at a test temperature of 400°C or higher and the uniform elongation being the strain before the indication of the maximum load from the start of tensile test is 40% or more in terms of a ratio to the the total elongation being the total strain from the start of tensile test to fracture obtained in a tensile test carried out at a test temperature of lower than 400°C, all measured from stress-strain curves in accordance with JIS G 0567,
the high strength hot rolled steel sheet comprising a composition consisting of, in terms of % by mass, C: 0.01 to 0.2%, Si: 0.5% or lower, Mn: 0.1 to 2%, P: 0.03% or lower, S: 0.01% or lower, Al: 0.01 to 0.07%, and N: 0.01% or lower, two or more elements selected from Ti: 0.005 to 0.3%, Nb: 0.005 to 0.6%, V: 0.005 to 1.0%, Mo: 0.005 to 0.5%, W: 0.01 to 1.0%, and B: 0.0005 to 0.0040%, optionally Cu : 0.1% or lower, optionally Ni : 0.1% or lower, optionally Sn : 0.1% or lower, optionally Mg : 0.01% or lower, optionally Sb : 0.01% or lower, optionally Co : 0.01% or lower, and the balance being Fe and inevitable impurities, and
the high strength hot rolled steel sheet comprising:
a matrix, which is substantially a ferrite single phase in which the area ratio of the ferrite phase is 95% or more; and
a structure in which alloy carbides having a size of lower than 10 nm are dispersed and deposited in the matrix in a state having no variant selection which is a state in which the orientation of carbides is not uniform to the base phase.

2. The high strength hot rolled steel sheet according to claim 1, wherein the high strength steel sheet has a coated layer on the surface.

3. The high strength hot rolled steel sheet according to claim 2, wherein the coated layer is a galvanized layer or a galvannealed layer.

4. A method for manufacturing a high strength hot rolled steel sheet according to claim 1, the method comprising:
successively performing a hot rolling process including heating a steel having a composition consisting of, in terms of % by mass, C: 0.01 to 0.2%, Si: 0.5% or lower, Mn: 0.1 to 2%, P: 0.03% or lower, S: 0.01% or lower, Al: 0.01 to 0.07%, N: 0.01% or lower, two or more elements selected from Ti: 0.005 to 0.3%, Nb: 0.005 to 0.6%, V: 0.005 to 1.0%, Mo: 0.005 to 0.5%, W: 0.01 to 1.0%, and B: 0.0005 to 0.0040%, optionally Cu : 0.1% or lower, optionally Ni : 0.1% or lower, optionally Sn : 0.1% or lower, optionally Mg : 0.01% or lower, optionally Sb: 0.01% or lower, optionally Co : 0.01% or lower, and the balance being Fe and inevitable impurities to an austenite single phase temperature range of 1150°C or higher and 1300°C or lower, subjecting the steel to hot rolling at a finish rolling temperature of 850°C or higher and 940°C or lower, and then coiling the steel sheet at a temperature of 400°C or higher and lower than 600°C to form a hot rolled steel sheet; and
a heat treatment process including removing surface scale of the hot rolled steel sheet, and subjecting the hot rolled sheet to heat treatment in which the hot rolled steel sheet is held at a temperature range of 650 to 750°C for 10 to 300s.

5. The method for manufacturing a high strength hot rolled steel sheet according to claim 4, further comprising performing coating treatment to the hot rolled sheet that is subjected to the heat treatment process.

6. The method for manufacturing a high strength hot rolled steel sheet according to claim 4, comprising performing galvanizing treatment or further galvannealing treatment subsequent to the heat treatment process.

## Patentansprüche

1. Hochfestes warmgewalztes Stahlblech mit hervorragender Warmprägungsformbarkeit,
wobei das hochfeste warmgewalzte Stahlblech eine hohe Festigkeit einer Zugfestigkeit von 590 MPa oder mehr und Zugeigenschaften aufweist, bei denen die lokale Dehnung, die die Spannung von der Anzeige der maximalen Last bis zum Bruch ist, größer ist als die gleichmäßige Dehnung, die die Spannung vor der Anzeige der maximalen Last vom Beginn des Zugversuchs ist, die bei einem Zugversuch erhalten wurde, der bei einer Prüftemperatur von 400°C oder höher durchgeführt wurde, und die gleichmäßige Dehnung, die die Spannung vor der Anzeige der maximalen Last vom Beginn des Zugversuchs ist, 40% oder mehr in Bezug auf das Verhältnis zur Gesamtdehnung beträgt, die die Gesamtspannung vom Beginn des Zugversuchs bis zum Bruch ist, die bei einem Zugversuch erhalten wurde, der bei einer Prüftemperatur von niedriger als 400°C durchgeführt wurde, wobei alle Werte anhand von Spannungs-Dehnungs-Kurven in Übereinstimmung mit JIS G 0567 gemessen wurden,
wobei das hochfeste warmgewalzte Stahlblech eine Zusammensetzung aufweist, in Bezug auf Massen-%, bestehend aus C: 0,01 bis 0,2%, Si: 0,5% oder weniger, Mn: 0,1 bis 2%, P: 0,03% oder weniger, S: 0,01% oder weniger, Al: 0,01 bis 0,07% und N: 0,01% oder weniger, zwei oder mehreren Elementen, ausgewählt aus Ti: 0,005 bis 0,3%, Nb: 0,005 bis 0,6%, V: 0,005 bis 1,0%, Mo: 0,005 bis 0,5%, W: 0,01 bis 1,0% und B: 0,0005 bis 0,0040%, gegebenenfalls Cu: 0,1% oder weniger, gegebenenfalls Ni: 0,1% oder weniger, gegebenenfalls Sn: 0,1% oder weniger, gegebenenfalls Mg: 0,01% oder weniger, gegebenenfalls Sb: 0,01% oder weniger, gegebenenfalls Co: 0,01% oder weniger, und wobei der Rest Fe und unvermeidbare Verunreinigungen sind, und
das hochfeste warmgewalzte Stahlblech aufweist:
eine Matrix, die im Wesentlichen eine Ferrit-Einzelphase ist, in der der Flächenanteil der Ferritphase 95% oder mehr beträgt; und
eine Struktur, in der Legierungscarbide mit einer Größe von weniger als 10 nm dispergiert und in der Matrix in einem Zustand ohne Variantenauswahl sind, der ein Zustand ist, in dem die Orientierung der Carbide nicht einheitlich zur Basisphase ist.

2. Hochfestes warmgewalztes Stahlblech gemäß Anspruch 1, worin das hochfeste Stahlblech eine Überzugsschicht auf der Oberfläche aufweist.

3. Hochfestes warmgewalztes Stahlblech gemäß Anspruch 2, worin die Überzugsschicht eine galvanisierte Schicht oder eine galvanogeglühte Schicht ist.

4. Verfahren zur Herstellung eines hochfesten warmgewalzten Stahlblechs gemäß Anspruch 1, das Verfahren umfassend:
nacheinander das Durchführen eines Warmwalzprozesses, umfassend das Erwärmen eines Stahls mit einer Zusammensetzung, in Bezug auf Massen-%, bestehend aus C: 0,01 bis 0,2%, Si: 0,5% oder weniger, Mn: 0,1 bis 2%, P: 0,03% oder weniger, S: 0,01% oder weniger, Al: 0,01 bis 0,07%, N: 0,01% oder weniger, zwei oder mehreren Elementen, ausgewählt aus Ti: 0,005 bis 0,3%, Nb: 0,005 bis 0,6%, V: 0,005 bis 1,0%, Mo: 0,005 bis 0,5%, W: 0,01 bis 1,0% und B: 0,0005 bis 0,0040%, gegebenenfalls Cu: 0,1% oder weniger, gegebenenfalls Ni: 0,1% oder weniger, gegebenenfalls Sn: 0,1% oder weniger, gegebenenfalls Mg: 0,01% oder weniger, gegebenenfalls Sb: 0,01% oder weniger, gegebenenfalls Co: 0,01% oder weniger, und wobei der Rest Fe und unvermeidbare Verunreinigungen sind, auf einen Austenit-Einzelphasentemperaturbereich von 1150°C oder höher und 1300°C oder niedriger, das Warmwalzen des Stahls bei einer Endwalztemperatur von 850°C oder höher und 940°C oder niedriger, und anschließend das Aufrollen des Stahlblechs bei einer Temperatur von 400°C oder höher und niedriger als 600°C, so dass ein warmgewalztes Stahlblech gebildet wird; und
eines Wärmebehandlungsprozesses, umfassend das Entfernen von Zunder von der Oberfläche des warmgewalzten Stahlblechs und das Wärmebehandeln des warmgewalzten Stahlblechs, bei dem das warmgewalzte Stahlblech in einem Temperaturbereich von 650 bis 750°C für 10 bis 300 s gehalten wird.

5. Verfahren zur Herstellung eines hochfesten warmgewalzten Stahlblechs gemäß Anspruch 4, ferner umfassend das Durchführen einer Beschichtungsbehandlung des warmgewalzten Stahlblechs, das dem Wärmebehandlungsprozess unterworfen wird.

6. Verfahren zur Herstellung eines hochfesten warmgewalzten Stahlblechs gemäß Anspruch 4, umfassend das Durchführen einer Galvanisierungsbehandlung oder ferner einer Galvanoglühbehandlung nach dem Wärmebehandlungsprozess.

## Revendications

1. Feuille d'acier laminée à chaud à haute résistance avec une excellente formabilité de poinçonnage à chaud,
la feuille d'acier laminée à chaud ayant une haute résistance d'une résistance à la traction de 590 MPa ou plus et des propriétés de traction dans lesquelles l'élongation locale étant la tension de l'indication d'une charge maximale à la rupture est plus grande que l'élongation uniforme étant la tension avant l'indication de la charge maximale au début du test de traction obtenue dans un test de traction réalisé à une température de test de 400°C ou supérieure et l'élongation uniforme étant la tension avant l'indication de la charge maximale au début du test de traction est de 40% ou plus en termes d'un rapport de l'élongation totale étant la tension totale au début du test de traction à la rupture obtenue dans un test de traction réalisé à une température de test inférieure à 400°C, toutes mesurées à partir de courbes tension-contrainte en accordance avec JIS G 0567,
la feuille d'acier laminée à chaud comprenant une composition constituée de, en termes de % en masse, C: 0,01 à 0,2%, Si: 0,5% ou moins, Mn: 0,1 à 2%, P: 0,03% ou moins, S: 0,01% ou moins, Al: 0,01 à 0,07%, et N: 0,01% ou moins, deux ou plus deux éléments choisis parmi Ti: 0,005 à 0,3%, Nb: 0,005 à 0,6%, V: 0,005 à 1,0%, Mo: 0,005 à 0,5%, W: 0,01 à 1,0%, et B: 0,0005 à 0,0040%, optionnellement Cu : 0,1% ou moins, optionnellement Ni : 0,1% ou moins, optionnellement Sn : 0,1% ou moins, optionnellement Mg : 0,01% ou moins, optionnellement Sb : 0,01% ou moins, optionnellement Co : 0,01% ou moins, et le reste étant du Fe et des impuretés inévitables, et
la feuille d'acier laminée à chaud comprenant :
une matrice, qui est substantiellement une phase simple de ferrite dans laquelle le rapport d'aire de la phase de ferrite est de 95% ou plus ; et
une structure dans laquelle des carbures d'alliage ayant une taille inférieure à 10 nm sont dispersés et déposés dans la matrice dans un état n'ayant pas de sélection variante qui est un état dans lequel l'orientation des carbures n'est pas uniforme à la phase de base.

2. La feuille d'acier laminée à chaud à haute résistance selon la revendication 1, dans laquelle la feuille d'acier à haute résistance a une couche de revêtement sur la surface.

3. La feuille d'acier laminée à chaud à haute résistance selon la revendication 2, dans laquelle la couche de revêtement est une couche galvanisée ou une couche galva-trempée.

4. Procédé de fabrication d'une feuille d'acier laminée à chaud à haute résistance selon la revendication 1, comprenant :
la réalisation successive d'un procédé de laminage à chaud comportant le chauffage d'un acier ayant une composition constituée de, en termes de % en masse, C: 0,01 à 0,2%, Si: 0,5% ou moins, Mn: 0,1 à 2%, P: 0,03% ou moins, S: 0,01% ou moins, Al: 0,01 à 0,07%, N: 0,01% ou moins, deux ou plus de deux éléments choisis parmi Ti: 0,005 à 0,3%, Nb: 0,005 à 0,6%, V: 0,005 à 1,0%, Mo: 0,005 à 0,5%, W: 0,01 à 1,0%, et B: 0,0005 à 0,0040%, optionnellement Cu : 0,1% ou moins, optionnellement Ni : 0,1% ou moins, optionnellement Sn : 0,1% ou moins, optionnellement Mg : 0,01% ou moins, optionnellement Sb: 0,01% ou moins, optionnellement Co : 0,01% ou moins, et le reste étant du Fe et des impuretés inévitables à un domaine de température de phase simple d'austénite de 1150°C ou supérieure et 1300°C ou inférieure, la soumission de l'acier à un laminage à chaud à une température de laminage de finition de 850°C ou supérieure et 940°C ou inférieure, et ensuite l'enroulement de la feuille d'acier à une température de 400°C ou supérieure et inférieure à 600°C pour former une feuille d'acier laminée à chaud ; et
un procédé de traitement thermique comportant l'élimination d'écailles de surface de la feuille d'acier laminée à chaud, et la soumission de la feuille roulée à chaud à un traitement thermique dans lequel la feuille d'acier laminée à chaud est maintenue à un domaine de température de 650 à 750°C pendant 10 à 300s.

5. Le procédé de fabrication d'une feuille d'acier laminée à chaud à haute résistance selon la revendication 4, comprenant en outre la réalisation d'un traitement de revêtement sur la feuille laminée à chaud qui est soumise au procédé de traitement thermique.

6. Le procédé de fabrication d'une feuille d'acier laminée à chaud à haute résistance selon la revendication 4, comprenant la réalisation d'un traitement de galvanisation ou d'un traitement de galva-trempage additionnel subséquent au procédé de traitement thermique.
